(19) Europäisches Patentamt
European Patent Office
Office européen des brevets

(11) **EP 3 451 178 A1**

(12) **EUROPEAN PATENT APPLICATION**
published in accordance with Art. 153(4) EPC

(43) Date of publication:
**06.03.2019 Bulletin 2019/10**

(51) Int Cl.:
***G06F 13/16*** (2006.01)

(21) Application number: **16900245.8**

(22) Date of filing: **29.11.2016**

(86) International application number:
**PCT/CN2016/107770**

(87) International publication number:
**WO 2017/185740 (02.11.2017 Gazette 2017/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.04.2016 CN 201610272977**

(71) Applicant: **Sanechips Technology Co., Ltd.
Shenzhen, Guangdong 518055 (CN)**

(72) Inventor: **WANG, Peng
Shenzhen
Guangdong 518055 (CN)**

(74) Representative: **Lavoix
Bayerstrasse 83
80335 München (DE)**

(54) **METHOD AND DEVICE FOR ACCESS CONTROL**

(57) Provided are a method and device for access control, said method comprising: within a preset count time, counting the number of times each access source performs access and the number of access violations concerning each virtual storage block (S201); according to the number of times of access of said access sources and the priority characteristics of the access sources, obtaining the arbitration weights corresponding to the access sources (S202); according to the number of access violations of each virtual storage block and a preset threshold for the number of violations, determining a virtual storage block that must be remapped and remapping, according to a preset remapping policy, said virtual storage block needing to be remapped (S203); according to said arbitration weights corresponding to the access sources, allocating a corresponding arbitration period to the virtual storage blocks after remapping (S204).

FIG. 1

**Description**

**TECHNICAL FIELD**

The disclosure relates to memory technologies, and particularly, to a method and a device for access control.

**BACKGROUND**

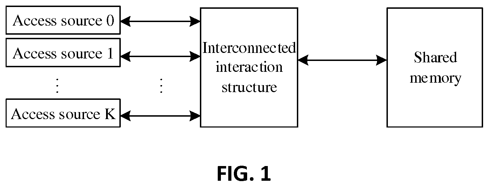

With extensive application of multi-core processors to various technical fields, multi-core processors may share a memory. Therefore, a higher requirement is also made to performance improvement of on-chip storage. At present, an interconnection exchange structure and shared storage solution shown in FIG. 1 are generally adopted for shared storage solutions of multi-core processors. For example, multiple access sources like a Digital Signal Processor (DSP), a Central Processing Unit (CPU), a Direct Memory Access (DMA) controller and a hardware accelerator contend for a shared memory in an arbitration manner through the interconnection exchange structure. The solution has the following defect: the shared memory may be used by only one access source in a same clock cycle and the other access sources are required to wait. When a low-speed access source occupies a memory access channel for a long time, access by a low-speed device may congest access by a high-speed device, thereby reducing access efficiency of the shared memory.

For this defect, solutions of adopting a storage structure with multiple independently accessible blocks instead of an original single-block storage structure and further optimizing an arbiter and an access control mechanism are proposed at present to improve the access efficiency. All of these solutions require a specific access source to have no time-varying but static access characteristic. However, characteristics of an access source dynamically change in different time buckets and different application scenarios and are inconsistent in each time bucket. Therefore, in a present access control solution for a shared memory, access control may not be implemented according to a time varying access characteristic of an access source.

**SUMMARY**

In order to solve the foregoing technical problem, embodiments of the disclosure are expected to provide a method and a device for access control, which may control access to a shared memory according to a time-varying access characteristic of an access source and, compared with a solution of performing access control on an access source with a static access characteristic, may shorten an access delay.

The technical solutions of the embodiments of the disclosure are implemented as follows.

According to a first aspect, the embodiments of the disclosure provide a method for access control, which may include the following operations.

Statistics is made in a preset counting time to obtain a number of times of access by each access source and a number of times of access conflicts of each virtual storage block.

An arbitration right weight corresponding to each access source is acquired according to the number of times of access by each access source and a priority characteristic of each access source.

A virtual storage block required to be remapped is determined according to the number of times of access conflicts of each virtual storage block and a preset threshold number of times of access conflicts, and the virtual storage block required to be remapped is remapped according to a preset remapping strategy.

A corresponding arbitration cycle is allocated on the remapped virtual storage block according to the arbitration right weight corresponding to each access source.

In the solution, the operation that the arbitration right weight corresponding to each access source is acquired according to the number of times of access by each access source and the priority characteristic of each access source may include the following operations.

An original weight corresponding to each access source is acquired according to a preset weight factor and the number of times of access by each access source.

The arbitration right weight corresponding to each access source is acquired according to the original weight of each access source and a priority of each access source.

In the solution, the operation that the original weight corresponding to each access source is acquired according to the preset weight factor and the number of times of access by each access source may include the following operation.

A shift operation is performed on the number of times of access by each access source according to the preset weight factor to obtain the original weight corresponding to each access source.

In the solution, the operation that the virtual storage block required to be remapped is determined according to the number of times of access conflicts of each virtual storage block and the preset threshold number of times of access conflicts may include the following operations.

When the number of times of access conflicts of a first virtual storage block in all virtual storage blocks is smaller than a first threshold number of times of access conflicts and the number of times of access conflicts of a second virtual storage block in all virtual storage blocks is larger than a second threshold number of times of access conflicts, the virtual storage block required to be remapped is determined to be the first virtual storage block and the second virtual storage block.

When the number of times of access conflicts of each virtual storage block is larger than the first threshold number of times of access conflicts or the number of times of access conflicts of each virtual storage block is smaller than the second threshold number of times of access conflicts, it is determined that all of the virtual storage blocks are not required to be remapped, the first threshold number of times of access conflicts being smaller than the second threshold number of times of access conflicts.

In the solution, the operation that the virtual storage block required to be remapped is remapped according to the preset remapping strategy may include the following operation.

High-address virtual storage sub-blocks are exchanged between the first virtual storage block and the second virtual storage block to obtain a remapped first virtual storage block and a remapped second virtual storage block.

According to a second aspect, the embodiments of the disclosure provide an access control device, which may include a statistics module, an arbitration module, a remapping module and an allocation module.

The statistics module may be configured to make statistics in a preset counting time to obtain a number of times of access by each access source and a number of times of access conflicts of each virtual storage block.

The arbitration module may be configured to acquire an arbitration right weight corresponding to each access source according to the number of times of access by each access source and a priority characteristic of each access source.

The remapping module may be configured to determine a virtual storage block required to be remapped is determined according to the number of times of access conflicts of each virtual storage block and a preset threshold number of times of access conflicts and remap the virtual storage block required to be remapped according to a preset remapping strategy.

The allocation module may be configured to allocate a corresponding arbitration cycle on the remapped virtual storage block according to the arbitration right weight corresponding to each access source.

In the solution, the arbitration module may be configured to: acquire an original weight corresponding to each access source according to a preset weight factor and the number of times of access by each access source; and acquire the arbitration right weight corresponding to each access source according to the original weight of each access source and a priority of each access source.

In the solution, the arbitration module may be configured to perform a shift operation on the number of times of access by each access source according to the preset weight factor to obtain the original weight corresponding to each access source.

In the solution, the remapping module may be configured to: when the number of times of access conflicts of a first virtual storage block in all virtual storage blocks is smaller than a first threshold number of times of access conflicts and the number of times of access conflicts of a second virtual storage block in all virtual storage blocks is larger than a second threshold number of times of access conflicts, determine the virtual storage block required to be remapped to be the first virtual storage block and the second virtual storage block; and

when the number of times of access conflicts of each virtual storage block is larger than the first threshold number of times of access conflicts or the number of times of access conflicts of each virtual storage block is smaller than the second threshold number of times of access conflicts, determine that all of the virtual storage blocks are not required to be remapped, the first threshold number of times of access conflicts being smaller than the second threshold number of times of access conflicts.

In the solution, the remapping module may be configured to exchange high-address virtual storage sub-blocks between the first virtual storage block and the second virtual storage block to obtain a remapped first virtual storage block and a remapped second virtual storage block.

The embodiments of the disclosure provide the method and the device for access control. The access arbitration right weight corresponding to each access source is acquired according to the number of times of access by each access source in a preset time bucket and the virtual storage block is remapped according to the number of times of access conflicts of each virtual storage block; and then the corresponding arbitration cycle is allocated in the remapped virtual storage block according to the access arbitration right weight corresponding to each access source. Therefore, access to a shared memory may be controlled according to a time-varying access characteristic of the access sources and, compared with a solution of performing access control on an access source with a static access characteristic, the solutions shorten an access delay.

## BRIEF DESCRIPTION OF DRAWINGS

FIG. 1 is a schematic diagram of an access control structure for a shared memory according to a conventional art.
FIG. 2 is a flowchart of a method for access control according to an embodiment of the disclosure.
FIG. 3 is a flowchart of acquiring an arbitration right weight corresponding to an access source according to an embodiment of the disclosure.
FIG. 4 is a schematic diagram of a remapping process for a virtual storage block according to an embodiment of the disclosure.
FIG. 5 is a structure diagram of an access control device according to an embodiment of the disclosure.
FIG. 6 is a hardware structure diagram of an access control device according to an embodiment of the disclosure.

## DETAILED DESCRIPTION

The technical solutions in the embodiments of the disclosure will be clearly and completely described below in combination with the drawings in the embodiments of the disclosure.

A basic thought of the embodiments of the disclosure is that: an access arbitration right weight corresponding to each access source is acquired according to a number of times of access by each access source in a preset time bucket, and a virtual storage block is remapped according to a number of times of access conflicts of each virtual storage block; and then a corresponding arbitration cycle is allocated in the remapped virtual storage block according to the access arbitration right weight corresponding to each access source. Therefore, access to a shared memory may be controlled according to a time-varying access characteristic of the access sources and, compared with a solution of performing access control on an access source with a static access characteristic, the solution shortens an access delay.

First Embodiment

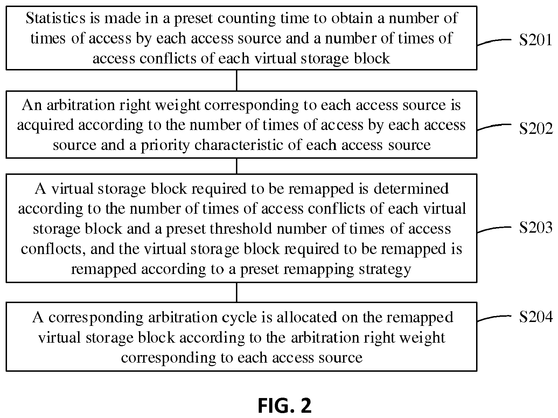

On the basis of the abovementioned basic thought, referring to FIG. 2, a method for access control provided in the embodiment of the disclosure is illustrated. The method may be applied to a shared storage device with multiple virtual storage blocks. The method may include the following steps.

In S201, statistics is made in a preset counting time to obtain a number of times of access by each access source and a number of times of access conflicts of each virtual storage block.

It is to be noted that the preset counting time in the embodiment may be different for different statistical values. Specifically, for the number of times of access by each access source, the preset counting time may be understood as follows: when the number of times of access by any access source reaches or exceeds a number of times of access updating threshold value, the number of times of access by each access source is cleared and statistics is remade. For the number of times of access conflicts of each virtual storage block, the preset counting time may be understood as follows: when the number of times of access conflicts of any virtual storage block reaches or exceeds a number of times of access conflicts updating threshold value, the number of times of access conflicts corresponding to the virtual storage block with the reaching or exceeding number of times of access conflicts is cleared and statistics is remade.

In a specific implementation process, statistics may be made to the number of times of access by each access source through a corresponding counter and, when each access source performs read access or write access, 1 may be added to the counter corresponding to the number of times of access for progressive increase. Statistics may also be made to the number of times of access conflicts of each virtual storage block through a corresponding counter and, every time when a read access or write access conflict for the corresponding virtual storage block occurs to multiple access sources, 1 may be added to the counter corresponding to the virtual storage block for progressive increase. The number of times of access updating threshold value and the number of times of access conflicts updating threshold value may be preset and stored in a corresponding register.

It is also to be noted that the preset counting time in the embodiment of the disclosure may also be a preset updating cycle time but this is likely to make it impossible to reflect an access characteristic of each access source because of a relatively low number of times of access by the access source in the updating cycle time. No elaborations will be made in the embodiment.

In S202, an arbitration right weight corresponding to each access source is acquired according to the number of times of access by each access source and a priority characteristic of each access source.

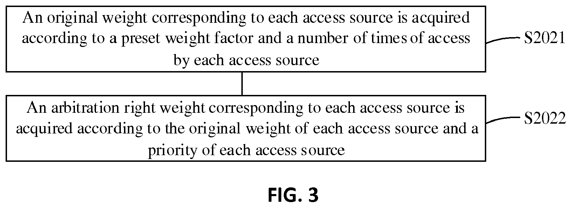

Exemplarily, referring to FIG. 3, the operation that the arbitration right weight corresponding to each access source is acquired according to the number of times of access by each access source and the priority characteristic of each access source includes S2021 and S2022.

In S2021, an original weight corresponding to each access source is acquired according to a preset weight factor and the number of times of access by each access source.

Preferably, the operation that the original weight corresponding to each access source is acquired according to the preset weight factor and the number of times of access by each access source may include the following operation.

A shift operation is performed on the number of times of access by each access source according to the preset weight factor to obtain the original weight corresponding to each access source.

In the specific implementation process, if the weight factor is F=2 and the shift operation is a rightward shift operation, access frequencies of three access sources are respectively as follows.

$$cycle\_accesss\_source\ (0)=32'd1000(32'b0011\_1110\_1000).$$

$$cycle\_accesss\_source\ (1)=32'd123(32'b0000\_0111\_1011).$$

$$cycle\_accesss\_source\ (2)=32'd234(32'b0000\_1110\_1010).$$

Herein, it is corresponding binary numbers in brackets on the right of the equations, similarly hereinafter.

Then, after the rightward shift operation is performed on the three access sources according to the weight factor F=2 to obtain corresponding original weights as follows.

$$weight(0)=32'd250(32'b0011\_1110\_1000>>2).$$

$$weight(1)=32'd30(32'b0000\_0111\_1011>>2).$$

$$weight(2)=32'd58(32'b0000\_1110\_1010>>2).$$

Herein, symbol >> is the rightward shift operation.

In S2022, the arbitration right weight corresponding to each access source is acquired according to the original weight of each access source and a priority of each access source.

It is to be noted that, for some advanced access sources, information representing present priority characteristics of the access sources may be embedded into access data to ensure that arbitration rights may be preferentially allocated. For example, sideband information like information of Quality of Service (QoS), priority information, read-first information, physical-layer frame numbers and the like may influence and even improve the arbitration right weights corresponding to the access sources. It can be understood that, when there are no priorities between each access source, it is determined as default that all of the access sources have the same priority and, in such case, the original weight corresponding to each access source is the arbitration right weight corresponding to the access source.

It is also to be noted that the arbitration right weight corresponding to each access source represents the maximum number of continuous clock cycles which correspond to each access source and when an arbitration right may be obtained. Therefore, if the arbitration right weight is higher, there are more opportunities of obtaining the arbitration right and an overall access delay may be shortened.

Specifically, when the three access sources contend for a resource, if the weight of a certain access source is *weight*(*0*), the access source may continuously obtain the arbitration right in *weight*(0) clock cycles and the access source may be ensured to keep accessing in the *weight*(0) cycles without interruption by the other access sources, thereby ensuring a data access bandwidth of the access source. After the *weight*(0) cycle, the next access source is queried in a polling manner, and if the weight of the next access source is *weight*(1), the access source may continuously obtain the arbitration right in *weight*(1) cycles; and so on. No elaborations will be made in the embodiment.

In S203, a virtual storage block required to be remapped is determined according to the number of times of access conflicts of each virtual storage block and a preset threshold number of times of access conflicts, and the virtual storage block required to be remapped is remapped according to a preset remapping strategy.

Exemplarily, the operation that the virtual storage block required to be remapped is determined according to the number of times of access conflicts of each virtual storage block and the preset threshold number of times of access conflicts includes the following operations.

When the number of times of access conflicts of a first virtual storage block in all virtual storage blocks is smaller than a first threshold number of times of access conflicts and the number of times of access conflicts of a second virtual storage block in all virtual storage blocks is larger than a second threshold number of times of access conflicts, the virtual storage block required to be remapped is determined to be the first virtual storage block and the second virtual storage block.

When the number of times of access conflicts of each virtual storage block is larger than the first threshold number of times of access conflicts or the number of times of access conflicts of each virtual storage block is smaller than the second threshold number of times of access conflicts, it is determined that all of the virtual storage blocks are not required to be remapped, the first threshold number of times of access conflicts being smaller than the second threshold number of times of access conflicts.

It is to be noted that the first threshold number of times of access conflicts and the second threshold number of times of access conflicts may be stored in a conflict threshold register, the first threshold number of times of access conflicts may be configured to represent a lower limit of a conflict value tolerable for the whole device and the second threshold number of times of access conflicts represents a lower limit of a conflict value intolerable for the whole device, i.e., an upper limit of the conflict value tolerable for the whole device.

From the above descriptions about the first threshold number of times of access conflicts and the second threshold number of times of access conflicts, it can be seen that:
when the number of times of access conflicts of the first virtual storage block in all virtual storage blocks is smaller than the first threshold number of times of access conflicts and the number of times of access conflicts of the second virtual storage block in all virtual storage blocks is larger than the second threshold number of times of access conflicts, it is indicated that there are a virtual storage block with excessive conflicts and another virtual storage block with few conflicts and thus it is necessary to reallocate, by address remapping, bandwidths for all access to the two virtual storage blocks.

When the number of times of access conflicts of each virtual storage block is larger than the first threshold number of times of access conflicts, it is indicated that the conflict counts of all the virtual storage blocks are excessive, and it is impossible to obtain an ideal remapping gain even by address remapping and thus address remapping is not executed on all of the virtual storage blocks; and when the number of times of access conflicts of each virtual storage block is smaller than the second threshold number of times of access conflicts, it is indicated that the conflict counts of all the virtual storage blocks are relatively large at present but are still tolerable and thus address remapping is also not executed on all of the virtual storage blocks.

Furthermore, the operation that the virtual storage block required to be remapped is remapped according to the preset remapping strategy includes the following operation.

High-address virtual storage sub-blocks are exchanged between the first virtual storage block and the second virtual storage block to obtain a remapped first virtual storage block and a remapped second virtual storage block.

It is to be noted that the first virtual storage block represents a virtual storage block with least conflicts and the second virtual storage block represents a virtual storage block with most serious conflicts. In the specific implementation process, each of addresses of the first virtual storage block and the second virtual storage block may preferably be halved to obtain two independent physical storage sub-blocks, hereinafter referred tp as a low-half physical storage sub-block and a high-half physical storage sub-block according to addresses, and then the high-half physical storage sub-blocks are exchanged between the first virtual storage block and the second storage block to implement remapping of the virtual storage blocks.

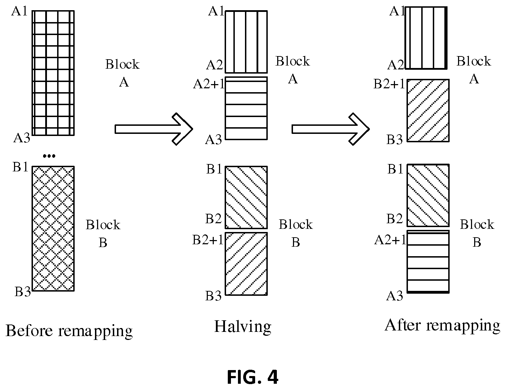

For example, in FIG. 4, a block A with most serious conflicts has an address range A1~A3 represented by a cross filled box and a block B with least conflicts has an address range B1~B3 represented by an intersected slash filled box. The block A is equally divided into A1~A2 and (A2+1)~A3, where A2=(A3-A1-1)/2. The block B is equally divided into B1~B2 and (B2+1)~B3, where B2=(B3-B1-1)/2. Then, an original address for access to (A2+1)~A3 is changed to (B2+1)~B3 and an original access for access to (B2+1)~B3 is changed to (A2+1)~A3, thereby implementing remapping of the virtual storage blocks. For a relatively long time, access conflicts of the block A may be reduced and idle resources of the block B are utilized. Moreover, access to the block A and the block B is concurrent access. Therefore, through the process, traffic and bandwidth resources are effectively reallocated between different access paths and beneficial effects of reducing overall conflicts and shortening the access delay are achieved.

In S204, a corresponding arbitration cycle is allocated on the remapped virtual storage block according to the arbitration right weight corresponding to each access source.

For S204, during specific implementation, a data path corresponding to a certain weight corresponding to a physical storage block may be gated. Specifically, for example, an original sending address corresponding to a virtual storage block A is 3'b000 and a corresponding arbitration data path is 0; and an original sending address corresponding to a virtual storage block B is 3'b001 and a corresponding arbitration data path is 1. Then, after the virtual storage block A and the virtual storage block B are remapped:

3'b001 is sent to a multiplexer corresponding to a high-half physical storage block of the virtual storage block A for switching to a data path of an arbiter 1;

3'b000 is sent to a multiplexer corresponding to a low-half physical storage block of the virtual storage block A for keeping a data path of an arbiter 0;

3'b000 is sent to a multiplexer corresponding to a high-half physical storage block of the virtual storage block B for switching to the data path of the arbiter 0; and

3'b001 is sent to a multiplexer corresponding to a low-half physical storage block of the virtual storage block B for keeping the data path of the arbiter 1.

Therefore, the data paths corresponding to the high-half physical storage blocks of the two virtual storage blocks are exchanged and the data paths corresponding to the low-half physical storage blocks of the two virtual storage blocks are not exchanged. Furthermore, high-half-segment addresses for access to the two virtual storage blocks also have been exchanged according to the address remapping step in 102. Therefore, original conflicting access on the weighted arbiter 0 may be directed onto the data paths of the weighted arbiter 0 and the weighted arbiter 1, that is, access bandwidths of different access sources are reallocated between the two virtual storage blocks. For a relatively long time, access conflicts implemented through the weighted arbiter 0 may be reduced and a great number of idle paths originally passing through the weighted arbiter 1 are also effectively utilized. In addition, access to the storage block A and the storage block B is concurrent access. Therefore, with adoption of remapping and static gating mechanisms of the disclosure, traffic and bandwidths are effectively reallocated between different access paths and the beneficial effects of reducing the overall conflicts and shortening the access delay are further achieved. Moreover, adaptive regulation may be performed in different time buckets according to output information of a probe unit for effective adaptation to an actual access characteristic.

It can be understood that, in the embodiment, the access source may not only be a single access source device such as a CPU, a DSP, DMA and a hardware accelerator but also be a set of multiple such access source devices, multiple access sources occupying the same memory access port in a time division multiplexing manner. When the access source is the set of the multiple access source devices, a shared storage device may be accessed through a transmission type of continuous burst or random single. Herein, initiation of single-type transmission refers to that each read/write address sent by the access source corresponds to a piece of data, and initiation of burst-type transmission refers to that each read/write address sent by the access source corresponds to a first address of a set of data and a receiver calculates each address of the data of the whole set. Specific implementation is a conventional implementation method for those skilled in the art and will not be elaborated in the embodiment. In the embodiment, the number of the access sources is represented by K.

The virtual storage block may be an independent and concurrently accessible storage unit in the shared storage device. Specifically, a shared storage space in the whole shared storage device may be divided into N independent virtual storage blocks, and an accessible address space in the whole shared storage space is also divided into N continuous segments allocated in the N independent virtual storage blocks respectively. N is generally less than or equal to K. When K is remarkably increased, N may theoretically be larger, thereby providing a larger concurrent bandwidth. However, in consideration of power consumption and area cost of a chip and engineering implementability, N is usually relatively small. For example, a value of N is preferably less than or equal to 8 but more than or equal to 2. Therefore, in the technical solutions of the embodiments of the disclosure, the access arbitration rights for mapping of the virtual storage blocks may be adaptively regulated the access characteristics of the access frequencies and the number of times of access conflicts on the premise that the value of N is smaller than K, so that the access conflicts are effectively resolved and an overall data throughput is improved.

Second Embodiment

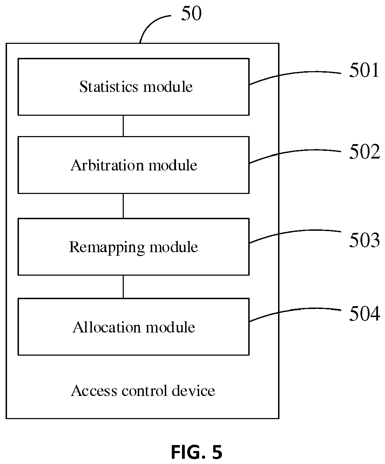

Based on the same technical concept of the foregoing embodiment, referring to FIG. 5, an access control device 50 provided in the embodiment of the disclosure is illustrated. The device 50 may include a statistics module 501, an arbitration module 502, a remapping module 503 and an allocation module 504.

The statistics module 501 is configured to make statistics in a preset counting time to obtain a number of times of access by each access source and a number of times of access conflicts of each virtual storage block.

The arbitration module 502 is configured to acquire an arbitration right weight corresponding to each access source according to the number of times of access by each access source and a priority characteristic of each access source.

The remapping module 503 is configured to determine a virtual storage block required to be remapped is determined according to the number of times of access conflicts of each virtual storage block and a preset threshold number of times of access conflicts and remap the virtual storage block required to be remapped according to a preset remapping strategy.

The allocation module 504 is configured to allocate a corresponding arbitration cycle on the remapped virtual storage block according to the arbitration right weight corresponding to each access source.

In the solution, the arbitration module 502 is configured to: acquire an original weight corresponding to each access source according to a preset weight factor and the number of times of access by each access source; and acquire the arbitration right weight corresponding to each access source according to the original weight of each access source and a priority of each access source.

In the solution, the arbitration module 502 is configured to perform a shift operation on the number of times of access by each access source according to the preset weight factor to obtain the original weight corresponding to each access source.

In the solution, the remapping module 503 is configured to: when the number of times of access conflicts of a first virtual storage block in all virtual storage blocks is smaller than a first threshold number of times of access conflicts and the number of times of access conflicts of a second virtual storage block in all virtual storage blocks is larger than a second threshold number of times of access conflicts, determine the virtual storage block required to be remapped to be the first virtual storage block and the second virtual storage block; and

when the number of times of access conflicts of each virtual storage block is larger than the first threshold number of times of access conflicts or the number of times of access conflicts of each virtual storage block is smaller than the second threshold number of times of access conflicts, determine that all of the virtual storage blocks are not required to be remapped, the first threshold number of times of access conflicts being smaller than the second threshold number of times of access conflicts.

In the solution, the remapping module 503 is configured to exchange high-address virtual storage sub-blocks between the first virtual storage block and the second virtual storage block to obtain a remapped first virtual storage block and a remapped second virtual storage block.

Third Embodiment

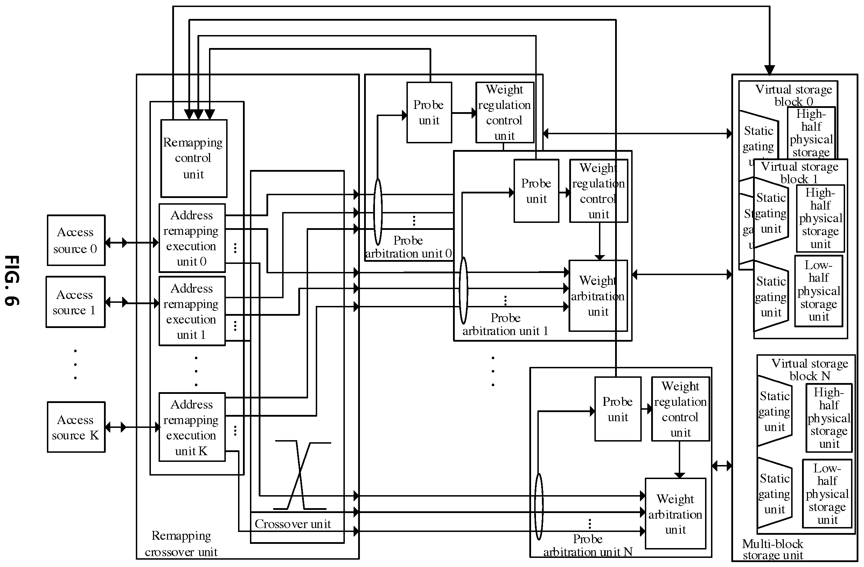

Based on the technical solutions of the foregoing embodiments and in combination with the structure of the access control device shown in FIG. 5, FIG. 6 is a hardware implementation structure diagram corresponding to the device structure shown in FIG. 5 according to an embodiment of the disclosure. In FIG. 6, probe arbitration units, a remapping crossover unit and a multi-block storage unit. The number of the probe arbitration units is consistent with the number of virtual storage blocks in the multi-block storage unit and is set to be N. Each probe arbitration unit corresponds to a virtual storage block. Each probe arbitration unit may include a probe subunit, a weight regulation control subunit and a weight arbitration subunit. The remapping crossover unit may include a remapping control subunit, a crossover subunit and address remapping execution units in a number consistent with the number of access sources. Each address remapping execution unit corresponds to an access source. The number of the access sources is K. The multi-block storage unit includes the N virtual storage blocks, each virtual storage block is equally divided into a high-half physical storage sub-block and a low-half physical storage sub-block and each physical storage sub-block corresponds to a static gating subunit.

For the probe arbitration units, corresponding to the device structure shown in FIG. 5, each probe subunit is configured to make statistics to obtain a number of times of access by each access source to the respectively corresponding virtual storage block and a number of times of access conflicts of the respectively corresponding virtual storage block and transmit the number of times of access conflicts to the remapping control subunit.

Each weight regulation control subunit acquires an original weight corresponding to each access source according to a preset weight factor and the number of times of access by each access source.

Each weight arbitration subunit acquires an arbitration right weight corresponding to each access source according to the original weight of each access source and a priority of each access source. It can be understood that, when there are no priorities between each access source, it is determined as default that all of the access sources have the same priority and, in such case, the original weight corresponding to each access source is the arbitration right weight corresponding to the access source.

For the remapping crossover unit, corresponding to the device structure shown in FIG. 5, the remapping control subunit is configured to determine a virtual storage block required to be remapped according to the number of times of access conflicts of each virtual storage block and a preset threshold number of times of access conflicts.

The remapping execution subunit corresponding to the virtual storage block required to be remapped is configured to remap the virtual storage block required to be remapped according to a preset remapping strategy.

The crossover subunit sends a sending address of the corresponding access source to the corresponding probe arbitration unit according to a new address after remapping or an original address, thereby implementing a subsequent access control flow on the basis of the remapped virtual storage block.

In the multi-block storage unit, the virtual storage blocks are configured into subunits providing data storage. Specifically, the whole shared memory is divided into the N independent virtual storage blocks and the whole accessible address space is divided into N continuous segments allocated into the N independent virtual storage blocks. A virtual storage block is further divided into two independent physical storage blocks and may be divided into a low-half physical storage sub-block and a high-half physical storage sub-block according to the address. Each physical storage sub-block corresponds to a static gating unit.

Each static gating unit is configured to allocate a corresponding arbitration cycle on the remapped virtual storage block according to the arbitration right weight corresponding to each access source. Specifically, gating of a data path of a certain weight arbitration subunit corresponding to the physical storage block is completed. Therefore, the arbitration right weight corresponding to each access source is reflected through the arbitration cycle allocated on the remapped virtual storage block.

During specific implementation, a data path of a certain weighted arbiter corresponding to a physical storage block is gated through the corresponding static gating unit. The static gating unit may receive remapping judgment bit information controlling gating thereof from the remapping control unit.

Specifically, for example, an original sending address corresponding to a virtual storage block A is 3'b000 and a corresponding arbitration data path is 0; and an original sending address corresponding to a virtual storage block B is 3'b001 and a corresponding arbitration data path is 1. Then, after the virtual storage block A and the virtual storage block B are remapped,

3'b001 is sent to a multiplexer corresponding to a high-half physical storage block of the virtual storage block A for switching to a data path of an arbiter 1;

3'b000 is sent to a multiplexer corresponding to a low-half physical storage block of the virtual storage block A for keeping a data path of an arbiter 0;

3'b000 is sent to a multiplexer corresponding to a high-half physical storage block of the virtual storage block B for switching to the data path of the arbiter 0; and

3'b001 is sent to a multiplexer corresponding to a low-half physical storage block of the virtual storage block B for keeping the data path of the arbiter 1.

Therefore, the data paths corresponding to the high-half physical storage blocks of the two virtual storage blocks are exchanged and the data paths corresponding to the low-half physical storage blocks of the two virtual storage blocks are not exchanged. Furthermore, high-half-segment addresses for access to the two virtual storage blocks also have been exchanged according to the address remapping step in 102. Therefore, original conflicting access on the weighted arbiter 0 may be directed onto the data paths of the weighted arbiter 0 and the weighted arbiter 1, that is, access bandwidths of different access sources are reallocated between the two virtual storage blocks. For a relatively long time, access conflicts implemented through the weighted arbiter 0 may be reduced and a great number of idle paths originally passing through the weighted arbiter 1 are also effectively utilized. In addition, access to the storage block A and the storage block B is concurrent access. Therefore, with adoption of remapping and static gating mechanisms of the disclosure, traffic and bandwidths are effectively reallocated between different access paths and the beneficial effects of reducing the overall conflicts and shortening the access delay are further achieved. Moreover, adaptive regulation may be performed in different time buckets according to output information of a probe unit for effective adaptation to an actual access characteristic.

It is to be noted that each unit and subunit forming the hardware structure in FIG. 6 may implement the corresponding modules of the device structure in FIG. 5. Therefore, a specific working process of FIG. 6 may refer to the technical solutions of the foregoing embodiments and will not be elaborated in the embodiment.

It can be understood that the hardware structure in FIG. 6 is only configured to express main structures of the technical solutions and related devices such as a register and a comparator will not be elaborated. During a practical application, each unit in FIG. 6 may be implemented on the basis of a Field-Programmable Gate Array (FPGA) or a Complex Programmable Logic Device (CPLD).

Those skilled in the art should know that the embodiment of the disclosure may be provided as a method, a system or a computer program product. Therefore, the disclosure may adopt a form of hardware embodiment, software embodiment or combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, device (system) and computer program product according to the embodiments of the disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that a device for realizing a function specified in one flow or multiple flows in the flowcharts and/or one block or multiple blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction device may be generated by the instructions stored in the computer-readable memory, the instruction device realizing the function specified in one flow or multiple flows in the flowcharts and/or one block or multiple blocks in the block diagrams.

These computer program instructions may further be loaded onto the computer or the other programmable data processing device, so that a series of operating steps are executed on the computer or the other programmable data processing device to generate processing implemented by the computer, and steps for realizing the function specified in one flow or multiple flows in the flowcharts and/or one block or multiple blocks in the block diagrams are provided by the instructions executed on the computer or the other programmable data processing device.

The above are only the preferred embodiments of the disclosure and not intended to limit the scope of protection of the disclosure.

**Claims**

1. A method for access control, comprising:

   making statistics in a preset counting time to obtain a number of times of access by each access source and a number of times of access conflicts of each virtual storage block;
   acquiring an arbitration right weight corresponding to each access source according to the number of times of access by each access source and a priority characteristic of each access source;
   determining a virtual storage block required to be remapped according to the number of times of access conflicts of each virtual storage block and a preset threshold number of times of access conflicts, and remapping the virtual storage block required to be remapped according to a preset remapping strategy; and
   allocating a corresponding arbitration cycle on the remapped virtual storage block according to the arbitration right weight corresponding to each access source.

2. The method of claim 1, wherein acquiring the arbitration right weight corresponding to each access source according to the number of times of access by each access source and the priority characteristic of each access source comprises:

   acquiring an original weight corresponding to each access source according to a preset weight factor and the number of times of access by each access source; and
   acquiring the arbitration right weight corresponding to each access source according to the original weight of each access source and a priority of each access source.

3. The method of claim 2, wherein acquiring the original weight corresponding to each access source according to the preset weight factor and the number of times of access by each access source comprises:
   performing a shift operation on the number of times of access by each access source according to the preset weight factor to obtain the original weight corresponding to each access source.

4. The method of claim 1, wherein determining the virtual storage block required to be remapped according to the number of times of access conflicts of each virtual storage block and the preset threshold number of times of access conflicts comprises:

   when the number of times of access conflicts of a first virtual storage block in all virtual storage blocks is smaller than a first threshold number of times of access conflicts and the number of times of access conflicts of a second virtual storage block in all virtual storage blocks is larger than a second threshold number of times of access conflicts, determining the virtual storage block required to be remapped to be the first virtual storage block and the second virtual storage block; and
   when the number of times of access conflicts of each virtual storage block is larger than the first threshold number of times of access conflicts or the number of times of access conflicts of each virtual storage block is smaller than the second threshold number of times of access conflicts, determining that all of the virtual storage blocks are not required to be remapped, the first threshold number of times of access conflicts being smaller than the second threshold number of times of access conflicts.

5. The method of claim 4, wherein remapping the virtual storage block required to be remapped according to the preset remapping strategy comprises:
   exchanging high-address virtual storage sub-blocks between the first virtual storage block and the second virtual storage block to obtain a remapped first virtual storage block and a remapped second virtual storage block.

6. An access control device, comprising:

   a statistics module, configured to make statistics in a preset counting time to obtain a number of times of access by each access source and a number of times of access conflicts of each virtual storage block;

   an arbitration module, configured to acquire an arbitration right weight corresponding to each access source according to the number of times of access by each access source and a priority characteristic of each access source;

   a remapping module, configured to determine a virtual storage block required to be remapped is determined according to the number of times of access conflicts of each virtual storage block and a preset threshold number of times of access conflicts and remap the virtual storage block required to be remapped according to a preset remapping strategy; and

   an allocation module, configured to allocate a corresponding arbitration cycle on the remapped virtual storage block according to the arbitration right weight corresponding to each access source.

7. The device of claim 6, wherein

   the arbitration module is specifically configured to: acquire an original weight corresponding to each access source according to a preset weight factor and the number of times of access by each access source; and acquire the arbitration right weight corresponding to each access source according to the original weight of each access source and a priority of each access source.

8. The device of claim 7, wherein
   the arbitration module is specifically configured to perform a shift operation on the number of times of access by each access source according to the preset weight factor to obtain the original weight corresponding to each access source.

9. The device of claim 6, wherein

   the remapping module is specifically configured to: when the number of times of access conflicts of a first virtual storage block in all virtual storage blocks is smaller than a first threshold number of times of access conflicts and the number of times of access conflicts of a second virtual storage block in all virtual storage blocks is larger than a second threshold number of times of access conflicts, determine the virtual storage block required to be remapped to be the first virtual storage block and the second virtual storage block; and

   when the number of times of access conflicts of each virtual storage block is larger than the first threshold number of times of access conflicts or the number of times of access conflicts of each virtual storage block is smaller than the second threshold number of times of access conflicts, determine that all of the virtual storage blocks are not required to be remapped, the first threshold number of times of access conflicts being smaller than the second threshold number of times of access conflicts.

10. The device of claim 9, wherein
    the remapping module is specifically configured to exchange high-address virtual storage sub-blocks between the first virtual storage block and the second virtual storage block to obtain a remapped first virtual storage block and a remapped second virtual storage block.

| Access source 0 | | Interconnected interaction structure | | Shared memory |
|---|---|---|---|---|
| Access source 1 | | | | |
| ⋮ | ⋮ | | | |
| Access source K | | | | |

**FIG. 1**

| Statistics is made in a preset counting time to obtain a number of times of access by each access source and a number of times of access conflicts of each virtual storage block | S201 |

| An arbitration right weight corresponding to each access source is acquired according to the number of times of access by each access source and a priority characteristic of each access source | S202 |

| A virtual storage block required to be remapped is determined according to the number of times of access conflicts of each virtual storage block and a preset threshold number of times of access conflocts, and the virtual storage block required to be remapped is remapped according to a preset remapping strategy | S203 |

| A corresponding arbitration cycle is allocated on the remapped virtual storage block according to the arbitration right weight corresponding to each access source | S204 |

**FIG. 2**

An original weight corresponding to each access source is acquired according to a preset weight factor and a number of times of access by each access source ⎯ S2021

An arbitration right weight corresponding to each access source is acquired according to the original weight of each access source and a priority of each access source ⎯ S2022

**FIG. 3**

Before remapping        Halving        After remapping

**FIG. 4**

50

| Statistics module | 501 |

| Arbitration module | 502 |

| Remapping module | 503 |

| Allocation module | 504 |

Access control device

**FIG. 5**

**FIG. 6**

# INTERNATIONAL SEARCH REPORT

| International application No. |
| --- |
| PCT/CN2016/107770 |

### A. CLASSIFICATION OF SUBJECT MATTER

G06F 13/16 (2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: virtual, core, processor, access, conflict, time, control, memory, multi, weight, map

### C. DOCUMENTS CONSIDERED TO BE RELEVANT

| Category* | Citation of document, with indication, where appropriate, of the relevant passages | Relevant to claim No. |
| --- | --- | --- |
| A | CN 102272744 A (IBM) 07 December 2011 (07.12.2011) description, paragraphs [0017]-[0028] | 1-10 |
| A | CN 103262425 A (HUAWEI TECHNOLOGIES CO., LTD.) 21 August 2013 (21.08.2013) the whole document | 1-10 |
| A | US 2008263249 A1 (MATSUSHITA ELECTRIC INDUSTRAL CO., LTD.) 23 October 2008 (23.10.2008) the whole document | 1-10 |
| A | CN 104321758 A (INTEL CORP.) 28 January 2015 (28.01.2015) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 09 February 2017 | 07 March 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WANG, Fang Telephone No. (86-10) 82245496 |
| --- | --- |

Form PCT/ISA /210 (second sheet) (July 2009)

**INTERNATIONAL SEARCH REPORT**
Information on patent family members

| | | International application No. |
|---|---|---|
| | | PCT/CN2016/107770 |

| Patent Documents referred in the Report | Publication Date | Patent Family | Publication Date |
|---|---|---|---|
| CN 102272744 A | 07 December 2011 | JP 2012514780 A | 28 June 2012 |
| | | WO 2010076239 A1 | 08 July 2010 |
| | | EP 2362955 A1 | 07 September 2011 |
| | | US 2010174840 A1 | 08 July 2010 |
| CN 103262425 A | 21 August 2013 | WO 2012079543 A1 | 21 June 2012 |
| | | US 2012166742 A1 | 28 June 2012 |
| US 2008263249 A1 | 23 October 2008 | WO 2006080371 A2 | 03 August 2006 |
| | | CN 101111830 A | 23 January 2008 |
| | | EP 1852783 A1 | 07 November 2007 |
| | | JP 4625836 B2 | 02 February 2011 |
| CN 104321758 A | 28 January 2015 | KR 20150086514 A | 28 July 2015 |
| | | JP 2015511052 A | 13 April 2015 |
| | | TW 201439771 A | 16 October 2014 |
| | | WO 2014113225 A1 | 24 July 2014 |
| | | EP 2946301 A1 | 25 November 2015 |
| | | US 2014201471 A1 | 17 July 2014 |

Form PCT/ISA/210 (patent family annex) (July 2009)